Europäisches Patentamt

European Patent Office

Office européen des brevets

Veröffentlichungsnummer: **0 286 882**

A2

# EUROPÄISCHE PATENTANMELDUNG

Anmeldenummer: 88104703.9

Int. Cl.⁴: **A01D 43/00**

Anmeldetag: 24.03.88

Priorität: 13.04.87 DE 3712507

Veröffentlichungstag der Anmeldung:
19.10.88 Patentblatt 88/42

Benannte Vertragsstaaten:
AT BE FR GB IT NL

Anmelder: **KARL MENGELE & SÖHNE**
**Maschinenfabrik und Eisengiesserei GmbH**
**& Co.**
**AugsburgerStrasse 50**
**D-8870 Günzburg(DE)**

Erfinder: **Der Erfinder hat auf seine Nennung**
**verzichtet**

Mähvorrichtung.

Zur Erreichung einer kompakten und einfachen Bauweise bei einer Mähvorrichtung zum reihenunabhängigen Ernten von Mais und dgl. wird vorgeschlagen, die Mitnehmer der äußeren Förderwalzen in Umlaufrichtung auf den Häcksler zu zuneigen und jeweils eine Abstreifwalze zuzuordnen, die mit einer größeren Umfangsgeschwindigkeit umläuft.

Desweiteren wird vorgeschlagen, die Förderwalzen mit konischer Außenform gegeneinander umgekehrt anzuordnen, so daß die Mitnehmer in ihrem Überdeckungsbereich einen seitlich geneigten Einzugskanal bilden. Damit wird eine rasche Übergabe und Weiterleitung der Erntegutstengel zum Häcksler hin erreicht, wobei die Erntegutstengel durch die hakenförmigen Mitnehmer bzw. den seitlich geneigten Einzugskanal beim Quertransport sicher gegen Umfallen gehalten werden.

FIG 2

EP 0 286 882 A2

Xerox Copy Centre

Die Erfindung betrifft eine Mähvorrichtung zum reihenunabhängigen Mähen von stengelartigem Erntegut, insbesondere Mais, nach dem Oberbegriff des Anspruchs 1.

Eine derartige Mähvorrichtung ist aus der DE-OS 32 26 876 bekannt, wobei vier Mäh-und Einzugswalzen über die Arbeitsbreite von etwa drei Metern angeordnet sind. Die äußeren Mäh-und Einzugswalzen führen dabei das gemähte Erntegut in einem weiten Bogen zunächst nach außen entlang einem die abgeschnittenen Stengel stützenden Abteilerbogen zu der inneren Mäh-und Einzugswalze, die die äußeren Stengel dann mittels langen, radialen Mitnehmern zusammen mit den inneren Stengeln weiterfördert. Dabei bilden Führungen eine jeweils gesonderten Einzugskanal, in dem die Stengel der äußeren von denen der inneren Einzugswalze getrennt gehalten sind. Diese, die Einzugs- und Mähwalzen konzentrisch umgreifenden Führungen übernehmen bei der Förderung und insbesondere bei der Übergabe der Stengel auf die innere Walze deren Abstützung.
Nachteilig ist neben dem langen Förderweg durch die Umleitung nach außen hin der erhöhte Bauaufwand, da jede Abteilerspitze mit den sich jeweils über die nächste Abteilerspitze hinausragenden Führungsbügel versehen sein muß. Weiterhin ist von Nachteil, daß durch die gezeigte doppelsträngige Förderung, die äußere Mähwalze weit vor der innerern Mähwalze angeordnet ist und sich somit bei größeren Arbeitszeiten eine hohe Frontlastigkeit und weite Ausladung nach vorne ergibt.

Desweiteren ist aus der DE-OS 34 06 551 eine Mähvorrichtung bekannt, bei der die starren Mitnehmer durch gesteuerte Mitnehmerfinger ersetzt sind. Dadurch sind Gegenführungen für die abgemähten Maisstengel entbehrlich, da diese in den hakenförmigen Mitnehmern während des Quertransportes ausreichend gehalten werden können und zur Übergabe an den Einzugskasten freigegeben werden.

Nachteilig ist jedoch auch hier der erhöhte Bauaufwand für die Vielzahl der Lagerstellen der - schwenkbeweglichen Zinken und die weite Ausladung der Einzugstrommel nach vorne bei größeren Arbeitsbreiten.

Demzufolge liegt der Erfindung die Aufgabe zugrunde, eine Mähvorrichtung der obengenannten Art zu schaffen, die bei einfacher und kompakter Bauweise eine rasche und sichere Übergabe und Weiterleitung der Erntegutstengel zum Häcksler hin gewährleistet.

Diese Aufgabe wird gelöst durch die kennzeichnenden Merkmale des Anspruchs 1. sowie des nebengeordneten Anspruchs 2. Durch die vorwärtsgeneigte Form der Mitnehmer werden die Stengel sicher erfasst und quer zum Häcksler hin transportiert. Im Überdeckungsbereich mit der Abstreifwalze werden die Mitnehmer der Mähwalze von den schneller umlaufenden Mitnehmern der Abstreifwalze "überholt" und somit die Stengel aus dem Mitnehmerhaken entfernt und an die Einzugswalzen abgegeben. Damit ergibt sich ein rascher Materialfluß ohne wesentlich Umlenkungen und ohne Reibung an irgendwelchen Führungen, die gerade bei den bekannten Lösungen häufig ein Herausfallen und Umstürzen der Maisstengel zur Folge haben kann. Durch den Verzicht auf Führungen oder Steuerungen ergibt sich weiterhin ein verringerter Bauaufwand und eine kürzere Baulänge.

Da das Erntegut von den Abstreifwalzen zweisträngig an den Seiten des Einzugskastens dem Häcksler zugeführt wird, ergibt bereits bei einer zweitrommeligen Ausführung eine weitere Einsparung an Baulänge und -gewicht, da der Durchmesser der Mähwalze bei gleicher Arbeitsbreite aufgrund der ebenfalls querfördernden Wirkung der Abstreifwalze insbesondere im oberen Bereich kleiner gewählt werden kann und sich somit die Mähwalzen mit ihrem unteren, größten Durchmesser teilweise unter dem Einzugskasten und/oder Häcksler erstrecken können.

Bei der Lösung gemäß dem nebengeordneten Anspruch 2 werden die zunächst aufrechtstehenden Maispflanzen abgeschnitten und durch den Vorschub des Häckslers in eine rückwärts geneigte Lage gebracht, wobei sie sich an der konischen Außenfläche abstützen können. Gleichzeitig werden sie von den vorzugsweise in Umfangsrichtung hintereinander angeordneten Mitnehmern erfaßt und in der Schräglage zum Häcksler hintransportiert. Dadurch gelangen die Maispflanzen durch den seitlich geneigten Einzugskanal in der gewünschten Lage, nämlich mit dem abgeschnittenen Ende zuerst, zu den Einzugswalzen, wobei die Maisstengel im Sinne eines guten Materialflusses unmittelbar und ohne große Richtungsänderung eingezogen werden können. Weitere  ̄eilhafte Ausgestaltungen sind Gegenstand der Unteransprüche sowie aus Beschreibung und Zeichnung zu entnehmen. Anhand von zwei Ausführungsbeispielen wir die Erfindung näher beschrieben und erläutert. Es zeigen

Fig. 1 eine Vorderansicht auf Mähvorrichtung mit zwei Mähwalzen und fliegend gelagerten Abstreifwalzen

Fig. 2 eine Draufsichtgemäß Fig. 1

Fig. 3 eine Draufsicht auf eine Mähvorrichtung mit vier Mähwalzen und zwei Abstreifwalzen

Fig. 4 eine Vorderansicht auf die Mähvorrichtung mit vier Mähwalzen und zwei Abstreifwalzen gemäß Fig. 3.

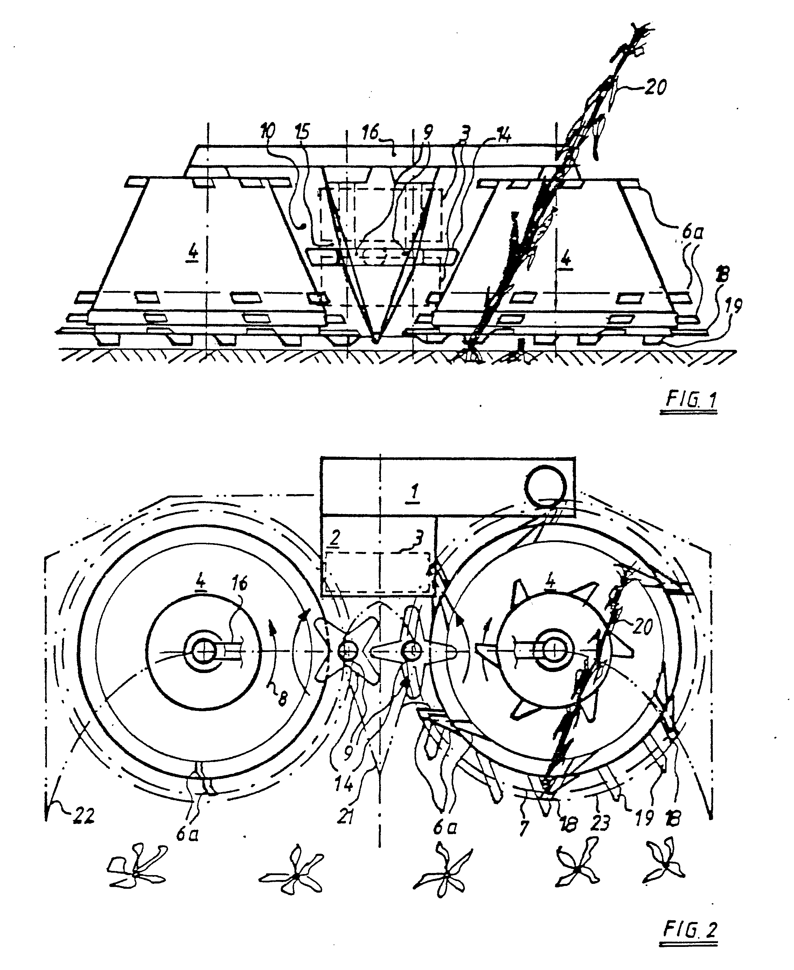

Fig. 1 zeigt eine Vorderansicht auf die horizontalen Einzugswalzen 3 (gestrichelt dargestellt), die im Einzugskasten 2 eines Häckslers 1 angeordnet sind. Die zu erntenden Maispflanzen 20 werden von umlaufenden Messern 18 im Zusammenwirken mit festen Gegenmessern 19 von den Mähwalzen 4 abgeschnitten und mittels der Mitnehmer 6a zur Mitte auf den Häcksler 1 zu weitergeleitet. Die Mitnehmer 6a, die in mehreren, hier drei Umlaufebenen angeordnet sind stützen dabei den Maisstengel ab und halten ihn durch ihre Umlaufrichtung geneigte Form wie in einem Haken fest.

Da durch diese, gegenüber der Radialen vorwärtsgerichtete Form ein Abstreifen an einem Blech oder ähnl. nicht möglich ist, sind die Abstreifwalzen 9 vorgesehen, die im Bereich des Einzugskanals 10 mit höherer Umfangsgeschwindigkeit als die Mähwalzen umlaufen. Dadurch werden die Mitnehmer 6a von hinten her durch die Mitnehmer 14 der Abstreifwalze 9 überholt und somit aus dem Halt der Mitnehmer 6a befreit und an die Einzugswalzen 3 weitergegeben. Dabei wird das untere Stengelende etwa in den Einzugspalt 15 gehoben und durch die höhere Umfangsgeschwindigkeit ein rascher Einzug erreicht. Die Abstreifwalzen 9 sind hier an der Antriebsvorrichtung 16 fliegend gelagert und in ihrer Außenform den Mähwalzen 4 angepaßt, sowie teilweise von einem mittleren Abteiler 21 überdeckt.

Fig. 2 zeigt den mittleren Abteiler 21 und die Randabteiler 22 in doppelt-strichpunktierter Form angedeutet, sowie die Antreibsvorrichtung 16 im mittleren Bereich aufgebrochen dargestellt. Außerdem ist der Spitzenkreis 7 der hakenförmigen untersten Mitnehmer 6a, sowie der etwas größere Messerumlaufkreis 23 eingezeichnet, über den die spitzzulaufenden Gegenmesser 19 hervorragen.
An der linken Mähwalze 4 sind lediglich zwei hakenförmige Mitnehmer 6a dargestellt, die in zwei übereinandergelegenen Ebenen umlaufen, wobei der obere zur Erreichung einer Stengelschräglage etwas nacheilend angeordnet ist.

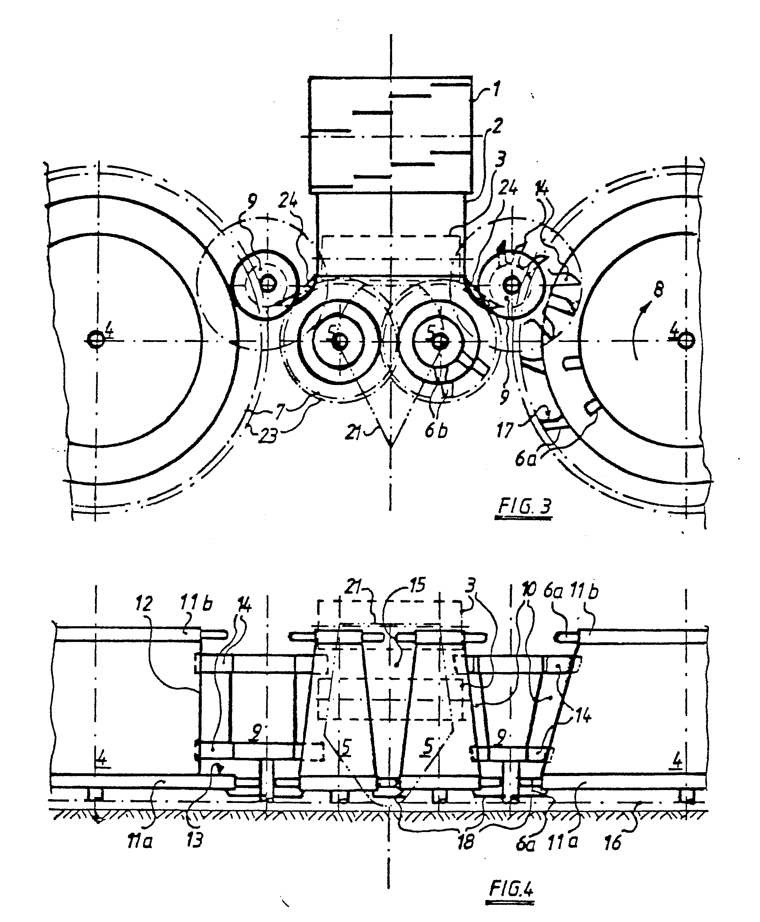

Fig. 3 zeigt eine Ausführungsform größerer Arbeitsbreite (linke Hälfte nur schematisch dargestellt) mit zwei äußeren Mähwalzen 4 und zwei inneren Mähwalzen 5, zwischen denen jeweils eine Abstreifwalze 9 angeordnet ist. Diese ist vorzugsweise nach unten hin konisch ausgebildet bzw. deren Mitnehmer 14 weisen eine konische Außenkontur auf, während die Mähwalzen 4 und 5 eine nach oben konische Außenform zeigen. Die konische Außenkontur kann dabei durch den Walzenmantel selbst oder auch nur durch mehrere durchmesserverschiedene Mitnehmerkränze 11a, 11b gebildet werden, die mittels eines Rotationskörpers insbesondere eines Zylinders 12 miteinander verbunden sind. Die Abstreifwalze(n) 9 streifen hier im Gegensatz zu Fig. 1 und Fig. 2 nicht durch 'Überholen' in Umlaufrichtung 8 der Mähwalze 4 ab, sondern drehen mit etwas höherer Umlaufgeschwindigkeit entgegengesetzt der Umlaufrichtung 8. Hierzu sind die Mitnehmer 6a bevorzugt mit einer kreisbogenförmigen vorderen Mitnehmerfläche 17 versehen. Dabei entspricht die Länge der Mitnehmer 14 etwa der Länge der Mitnehmer 6a, so daß der Maisstengel sicher aus dem Mitnehmer 6a entfernt wird und zur sicheren Abstützung zugleich in den Zahngrund der Mitnehmer 14 hineingedrückt wird. Die Abstreifwalze 9 kämmt zugleich mit der inneren Mähwalze 5, so daß die Stengel an diese weitergegeben werden, wobei im Sinne eines raschen Materialflusses und einer sicheren Übergabe die Mähwalze 5 wiederum schneller umlaufen kann als die Abstreifwalze 9. Die innere Mähwalze 5 und die Abstreifwalze 9 weisen in etwa radiale oder etwas rückwärts gerichtete Mitnehmer 6b bzw. 14 auf, um ein klemmfreies Abstreifen an Abstreifblechen des dachförmigen Mittelabteilers 21 bzw. am Einlaufblech 24 zu gewährleisten. Da diese einen weitaus geringeren Quertransportweg als die äußere Mähwalze 4 aufweisen, ist dies ohne Schwierigkeiten möglich. Durch diese Anordnung sind Abreitsbreiten mit ca. fünf Metern realisierbar, wobei für die Straßenfahrt die äußeren Mähwalzen 4 z.B. um die Achse der inneren Mähwalze 5 nach innen geschwenkt werden kann.

Fig. 4 zeigt die Vorderansicht gemäß Fig. 3, wobei die hier zum Häcksler hin nahegelegenen Abstreifwalzen 9 sich mit den Mähwalzen 4 und 5 überdecken. Dadurch fördern die Mitnehmer 14 der Abstreifwalze 9 die Maisstengel sowohl von der äußeren 4 als auch der inneren Mähwalze 5 direkt in den Einzugsspalt der Einzugswalzen 3, da die Umfangsgeschwindigkeit der Abstreifwalze 9 in bevorzugter Ausführung größer als die der inneren Mähwalze 5 sein kann, wodurch ein rascher Materialfluß erreichbar ist. Hier sind beide Mähwalzen 4 und 5 nach oben leicht konisch ausgebildet, wobei sich mit der Abstreifwalze ein seitlich geneigter Einzugskanal 10 ergibt. Ebenso kann auch die innere Mähwalze 5 jeweils nach unten konisch ausgebildet sein, wobei diese dann zugleich als Abstreifwalze 9 ausgebildet sein kann.

Ansprüche

1. Mähvorrichtung zum reihenunabhängigen Mähen von stengelartigem Erntegut, insbesondere Mais, wobei das gemähte Erntegut über in einem Einzugskasten angeordnete Einzugswalzen einem Häcksler zugeführt wird und dem Einzugskasten mehrere rotierende Mähwalzen mit starren Mitnehmern zugeordnet sind, die durch Überdeckung der Mitnehmerspitzenkreise mit einer weiteren Walze zusammenwirken, dadurch gekennzeichnet, daß die Mitnehmer (6a) der äußeren Mähwalzen (4) in wenigstens einer Umlaufebene gegenüber der radialen Richtung in Umlaufrichtung (8) nach vorne geneigt sind und den äußeren Mähwalzen (4) jeweils eine Abstreifwalze (9) zugeordnet ist, deren Umfangsgeschwindigkeit größer als die der äußeren Mähwalze (4) ist.

2. Mähvorrichtung insbesondere nach Anspruch 1, dadurch gekennzeichnet, daß die Mitnehmer (6a) der äußeren Mähwalze (4) und der mit dieser zusammenwirkenden Walze (9,bzw.5) durch eine jeweils gegeneinander umgekehrt konische Außenform, einerseits nach oben gerichtet, andererseits nach unten gerichtet, einen seitlichen geneigten Einzugskanal (10) bilden.

3. Mähvorrichtung wenigstens nach Anspruch 1, dadurch gekennzeichnet, daß die Abstreifwalze (9) bei Ausbildung mit wenigstens vier Mähwalzen (4 und 5) jeweils mit der inneren und äußeren Mähwalze (4) zusammenwirkt.

4. Mähvorrichtung wenigstens nach Anspruch 1, dadurch gekennzeichnet, daß die Abstreifwalze (9) durch die innere Mähwalze (5) gebildet wird.

5. Mähvorrichtung nach Anspruch 2, dadurch gekennzeichnet, daß die Mähwalze (4) durch wenigstens einen unteren, durchmessergrößeren Mitnehmerkranz (11a) und einen oberen, durchmesserkleineren Mitnehmerkranz (11b) gebildet ist, wobei die beiden (11a,b) Mitnehmerkränze durch einen Zylinder (12) derart verbunden sind, daß der untere Mitnehmerkranz (11a) eine Auflagefläche (13) bildet.

6. Mähvorrichtung wenigstens nach Anspruch 1, dadurch gekennzeichnet, daß wenigstens ein Mitnehmerkranz (14) der Abstreifwalze (9) teilweise in den Einzugsspalt (15) zwischen oberer und unterer Einzugswalze (3) hineinragt.

7. Mähvorrichtung wenigstens nach Anspruch 1, dadurch gekennzeichnet, daß die Abstreifwalzen (9) von oben her angetrieben sind und an der Antriebsvorrichtung (16) fliegend gelagert sind.

8. Mähvorrichtung wenigstens nach Anspruch 1, dadurch gekennzeichnet, daß die Mitnehmer (6a) der äußeren Mähwalzen (4) hakenförmig mit einer kreisbogenförmigen Mitnehmerfläche (17) ausgebildet sind.

9. Mähvorrichtung wenigstens nach Anspruch 1, dadurch gekennzeichnet, daß die Messer (18) entsprechend den Mitnehmern (6a) hakenförmig ausgebildet sind.

10. Mähvorrichtung wenigstens nach Anspruch 9, dadurch gekennzeichnet, daß die Messer (18) unmittelbar unterhalb der Mitnehmer (6a) angeordnet sind und mit entgegen der Umlaufrichtung (8) geneigten festen Gegenmessern (19) zusammenwirken.

0 286 882

FIG. 1

FIG. 2

*FIG. 3*

*FIG.4*